(19) **Europäisches Patentamt** / **European Patent Office** / **Office européen des brevets**

(11) **EP 3 882 056 B1**

(12) **EUROPÄISCHE PATENTSCHRIFT**

(45) Veröffentlichungstag und Bekanntmachung des Hinweises auf die Patenterteilung:
**25.10.2023   Patentblatt 2023/43**

(21) Anmeldenummer: **20163918.4**

(22) Anmeldetag: **18.03.2020**

(51) Internationale Patentklassifikation (IPC):
**B60G 17/052** (2006.01)

(52) Gemeinsame Patentklassifikation (CPC):
**B60G 17/0521; B60G 17/0523;** B60G 2400/252;
B60G 2400/51222; B60G 2400/61;
B60G 2500/2012; B60G 2500/203; B60G 2500/30

(54) **VERFAHREN ZUR STEUERUNG EINER LUFTFEDERUNGSANLAGE EINES FAHRZEUGS**

METHOD FOR CONTROLLING A PNEUMATIC SYSTEM OF A VEHICLE

PROCÉDÉ DE COMMANDE D'UNE INSTALLATION DE SUSPENSION PNEUMATIQUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.09.2021   Patentblatt 2021/38**

(73) Patentinhaber: **ZF CV Systems Europe BV**
**1170 Brussels (BE)**

(72) Erfinder:
• **JOVERS, Ingo**
  **30989 Gehrden (DE)**
• **LENZ, Uwe**
  **31535 Neustadt (DE)**

(74) Vertreter: **Ohlendorf, Henrike**
**ZF CV Systems Hannover GmbH**
**Am Lindener Hafen 21**
**30453 Hannover (DE)**

(56) Entgegenhaltungen:
| | |
|---|---|
| EP-A2- 1 647 425 | DE-A1- 3 815 612 |
| DE-A1- 4 003 188 | DE-A1- 10 243 895 |
| DE-A1- 10 244 363 | DE-A1- 10 330 895 |
| DE-A1- 19 515 255 | DE-A1- 19 546 730 |
| DE-A1-102006 017 899 | DE-A1-102012 006 468 |
| DE-A1-102018 118 062 | DE-B4-102005 032 219 |

**Beschreibung**

Die Erfindung betrifft ein Verfahren zur Steuerung einer Luftfederungsanlage eines Fahrzeugs hinsichtlich der Verbesserung seines Lenk- und Bremsverhaltens entsprechend dem Oberbegriff des Patentanspruchs 1.

Das Fahrzeug weist eine luftgefederte Vorderachse und mindestens eine luftgefederte Hinterachse auf. Die Vorderachse und die Hinterachse sowie ggf. weitere Achsen des Fahrzeugs werden im Folgenden gemeinsam als die Fahrzeugachsen bezeichnet. Das Fahrzeug weist beidseitig an jeder der luftgefederten Fahrzeugachsen jeweils zwischen einem Fahrwerksbauteil und einem Fahrzeugrahmen angeordnete Luftfedern mit jeweils einem druckluftgefüllten Federbalg auf. Das Fahrzeug weist außerdem eine Ventilanordnung mit jeweils einem jeder der Luftfedern zugeordneten Absperrventil und den Absperrventilen gruppenweise vorgeschalteten kombinierten Einlassventilen/Auslassventilen und eine Sensoranordnung mit jeweils einem nahe an jeder der Luftfedern angeordneten Wegsensor zur Messung der jeweiligen Fahrwerkshöhe sowie mit jeweils einen an den Federbalg jeder der Luftfedern angeschlossenen Drucksensor zur Messung des jeweiligen Balgdrucks auf.

Der hier genutzte Begriff Fahrwerkshöhe bezeichnet den Abstand von einem Fahrwerksbauteil, wie beispielsweise einem Querlenker oder einem Längslenker des Fahrwerks, zu dem Fahrzeugrahmen beziehungsweise der Karosserie des Fahrzeugs.

Luftfedern weisen gegenüber konventionellen Stahlfedern mehrere Vorteile auf und kommen daher bevorzugt in bestimmten Gattungen von Straßenfahrzeugen, wie Omnibussen, Sattelzugmaschinen, geländegängigen Personenwagen und Oberklasselimousinen, wie auch in Schienenfahrzeugen, hier bevorzugt als Sekundärfedern, zum Einsatz. Durch die Veränderung der in den Federbälgen der Luftfedern wirksamen Balgdrücke kann das Niveau des Fahrzeugrahmens gegenüber einem Fahrwerksbauteil oder ganz allgemein gegenüber der Fahrbahn unabhängig von einer Beladungssituation, also einer Ladungsmasse und einer Ladungsverteilung, konstant gehalten oder bedarfsweise, beispielsweise für eine Geländefahrt, erhöht oder, zum Beispiel zur Erleichterung eines Einsteigens und Aussteigens von Passagieren oder einer Beladung mit und Entladung von Gütern, abgesenkt werden.

Eine Luftfederungsanlage an einer Fahrzeugachse eines Straßenfahrzeugs weist üblicherweise an jeder Fahrzeugseite eine Luftfeder mit einem druckluftgefüllten Federbalg auf, die jeweils zwischen einem Fahrwerksbauteil, wie zum Beispiel einem Querlenker oder Längslenker, und dem Fahrzeugrahmen angeordnet ist. An jede der Luftfedern beziehungsweise an jeden der Federbälge ist eine Anschlussleitung mit einem als ein 2/2-Wege-Schaltventil ausgebildeten Absperrventil angeschlossen. Den beiden Absperrventilen einer Fahrzeugachse ist ein als ein 3/2-Wege-Schaltventil ausgebildetes kombiniertes Einlass-/Auslassventil vorgeschaltet, mittels dessen die Anschlussleitungen wechselweise mit einem Entlüftungsausgang beziehungsweise mit einer zu einem Entlüftungsausgang führenden Entlüftungsleitung oder mit einer Druckluftquelle beziehungsweise mit einer an einen Druckluftspeicher oder eine Druckluftquelle angeschlossenen Versorgungsleitung verbindbar sind. Im unbetätigten, bei einer Ausbildung als Magnetventil unbestromten Zustand des kombinierten Einlass-/Auslassventils sind die zugeordneten Anschlussleitungen üblicherweise mit dem Entlüftungsausgang beziehungsweise mit der Entlüftungsleitung verbunden.

Zur Messung der jeweiligen Fahrwerkshöhe ist nahe an jeder der Luftfedern jeweils ein Wegsensor angeordnet und gegebenenfalls zur Messung des jeweiligen Balgdrucks an den Federbalg jeder der Luftfedern ein Drucksensor angeschlossen. Eine entsprechende Luftfederungsanlage einer Fahrzeugachse ist beispielsweise aus der DE 195 46 730 A1 bekannt. Die Absperrventile und das kombinierte Einlass-/Auslassventil dieser Luftfederungsanlage sind als von einer elektronischen Steuereinheit direkt ansteuerbare Magnetschaltventile ausgebildet.

In der DE 195 15 255 A1 ist eine Luftfederungsanlage eines Solobusses beziehungsweise eines Gelenkbusses beschrieben, bei der zwischen den Anschlussleitungen von Luftfedern einer Vorderachse des Solobusses beziehungsweise eines Gelenkbusvorläufers des Gelenkbusses ein Querdrosselventil angeordnet ist. Im normalen Fahrbetrieb befindet sich das Querdrosselventil in seiner Drosselstellung, sodass dann ein Druckausgleich zwischen den Luftfedern der Vorderachse erfolgt. Bei einer Kurvenfahrt und bei einem einseitigen Absenken des Fahrzeugrahmens (Kneeling) wird das Querdrosselventil in seine Sperrstellung umgeschaltet, wodurch der Druckausgleich zwischen den Luftfedern der Vorderachse dann unterbunden ist. Den Absperrventilen der Vorderachse und einer Hinterachse des Solobusses beziehungsweise des Gelenkbusvorläufers ist ein gemeinsames kombiniertes Einlass-/Auslassventil vorgeschaltet. Den Absperrventilen der Hinterachse des Gelenkbusnachläufers ist ein separates Einlass-/Auslassventil vorgeschaltet. Zwischen dem Einlass-/Auslassventil und den Absperrventilen des Solobusses beziehungsweise des Gelenkbusvorläufers und eines Gelenkbusnachläufers des Gelenkbusses ist jeweils ein Drosselschaltventil angeordnet, mittels dessen die Belüftung und Entlüftung der Federbälge der Luftfedern bedarfsweise gedrosselt werden kann. Während bei beiden Varianten die Hinterachsen jeweils beidseitig mit einem Wegsensor versehen sind, ist an der Vorderachse nur ein Wegsensor nahe der rechten Luftfeder angeordnet. Auch bei dieser Luftfederungsanlage sind die Absperrventile, Einlass-/Auslassventile und Drosselschaltventile als direkt von einer elektronischen Steuereinheit ansteuerbare Magnetschaltventile ausgebildet.

Aus der DE 10 2005 032 219 B4 sind eine Luftfederungsanlage einer Fahrzeugachse und mehrere Ausführungen einer Luftfederungsanlage eines zweiachsigen Fahrzeugs bekannt, bei denen Absperrventilen an den Fahrzeugachsen jeweils ein eigenes Einlass-/Auslassventil vorgeschaltet ist, und bei denen zwischen Anschlussleitungen der Luftfedern der Vorderachse jeweils ein Querdrosselventil angeordnet ist. Obwohl dadurch ein Druckausgleich zwischen den Luftfedern der Vorderachse möglich ist, ist die Vorderachse beidseitig mit Wegsensoren versehen, sodass ein Mittelwert aus gemessenen Fahrwerkshöhenwerten gebildet werden kann. Die Absperrventile und die kombinierten Einlass-/Auslassventile sowie die Querdrossel-Schaltventile dieser Luftfederungsanlage sind als druckgesteuerte Schaltventile ausgeführt, denen jeweils ein von einer elektronischen Steuereinheit ansteuerbares, als 3/2-Wege-Magnetschaltventil ausgebildetes Vorsteuerventil zugeordnet ist.

Schließlich ist in der DE 10 2012 006 468 A1 eine Luftfederungsanlage eines zweiachsigen Fahrzeugs beschrieben, bei der Absperrventilen der Fahrzeugachsen jeweils seitenweise ein gemeinsames kombiniertes Einlass-/Auslassventil vorgeschaltet ist, und bei der zwischen Anschlussleitungen der Luftfedern der Vorderachse ein schaltbares Querdrosselventil angeordnet ist. Auch bei dieser Luftfederungsanlage ist eine Vorderachse beidseitig mit Wegsensoren versehen. Die Absperrventile und die kombinierten Einlass-/Auslassventile sowie das Querdrosselventil dieser Luftfederungsanlage sind als von einer elektronischen Steuereinheit direkt ansteuerbare Magnetschaltventile ausgebildet.

In der DE 10 2018 118 062 A1 ist ein Verfahren zur Lageregelung eines Fahrzeugs beschrieben. Das Fahrzeug weist Räder auf, die über eine Federeinrichtung federnd mit einem Fahrgestell verbunden sind. Zur Einstellung einer Höhenposition eines Rads wird nicht nur eine Ist-Höhenposition, sondern auch eine Radbelastungskraft berücksichtigt. Eine Überlagerung einer Höhenpositionsregelung der einzelnen Räder mit einer Regelung hinsichtlich der Radaufstandskräfte erfolgt so, dass eine Soll-Höhenposition jedes einzelnen Rads oder einer Teilmenge der Räder aufgrund einer Positionsregelung ermittelt wird. Die Soll-Höhenposition wird mittels eines Korrekturwerts, der für alle Räder oder eine Auswahl der Räder aus der Regelung der Radaufstandskräfte oder Federlasten ermittelt wird, korrigiert. Eine zweiter Korrekturwert wird basierend auf einem Vergleich einer aufgrund einer Vielzahl von Radbelastungskräften berechneten Ideallastverteilung mit einer ebenfalls berechneten Reallastverteilung berechnet. Eine Federlast wird jeweils für ein Paar von Rädern berechnet, die auf einer Diagonalen (von einem Mittelpunkt des vorderen linken Rads zu einem Mittelpunkt des hinteren rechten Rads bzw. von einem Mittelpunkt des hinteren linken Rads zu einem Mittelpunkt des vorderen rechten Rads) liegen. Die Federlast kann mittelbar oder unmittelbar gemessen werden. Als Beispiel ist ein Drucksensor genannt, mit dem eine Federlast für eine bestimmte Diagonale bestimmt werden kann. Es können auch Federlasten an einzelnen Rädern gemessen werden und basierend auf diesen Messwerten eine gesamte Federlast für die jeweilige Diagonale ermittelt werden.

In der DE 38 15 612 A1 ist eine druckluftgestützte Fahrzeugfederung beschrieben. Eine Regelung der Fahrzeugfederung geschieht separat für die linke und die rechte Fahrzeugseite. Dabei ist es möglich, dass an einer Achse zwischen einem Luftfederelement links und einem Luftfederelement rechts eine größere Druckdifferenz herrscht. Ein zu hoher Druckunterscheid zwischen Luftfederelementen einer linken und einer rechten Fahrzeugseite an einer Fahrzeugachse soll behoben werden können, ohne dass sich ein Niveau eines Fahrzeugaufbaus und eine Verteilung der Last auf die einzelnen Gruppen von Luftfederelementen unzulässig stark verändern. Auf jeder Fahrzeugseite ist dazu eine Weg-Messeinrichtung so angeordnet, dass sie eine Länge des jeweiligen Luftfederelements erfassen kann.

In der DE 10 2006 017 899 A1 ist ein Verfahren zur Beeinflussung eines Fahrverhaltens eines Fahrzeugs beschrieben. Es wird eine Kurvenfahrtgröße ermittelt, die eine vorliegende Kurvenfahrt des Fahrzeugs repräsentiert. An wenigstens einem Fahrzeugrad wird eine Radaufstandskraft gemäß einem funktionalen Zusammenhang in Abhängigkeit der ermittelten Kurvenfahrgröße beeinflusst. Dabei werden die Radaufstandskräfte zweier Räder auf einer Fahrzeugdiagonalen stets gleichsinnig geändert, indem die Radaufstandskräfte beider Räder entweder gleichzeitig erhöht oder gleichzeitig reduziert werden.

In der EP 1 & 647 425 A2 ist eine Steuervorrichtung für eine Luftfederungsanlage für ein Kraftfahrzeug beschrieben.

In der DE 40 03 188 A1 ist ein Verfahren zur Steuerung einer Höhe eines Fahrzeugs mit einer Fahrzeughöheneinstellvorrichtung beschrieben.

Aus den Dokumenten DE 10 3 30 895 A1, DE 102 43 895 A1 und DE 102 44 363 A1 sind weitere Verfahren zur Verringerung der Verwindung eines Fahrzeugrahmens vorbekannt.

Die vorliegende Erfindung dient zur Steuerung einer Luftfederungsanlage eines Fahrzeugs, das eine luftgefederte Vorderachse und mindestens eine luftgefederte Hinterachse aufweist. Die Luftfederungsanlage weist beidseitig an jeder der luftgefederten Fahrzeugachsen jeweils zwischen einem Fahrwerksbauteil und einem Fahrzeugrahmen angeordnete Luftfedern mit jeweils einem druckluftgefüllten Federbalg auf. Das Fahrzeug weist außerdem eine Ventilanordnung mit jeweils einem jeder der Luftfedern zugeordneten Absperrventil und den Absperrventilen gruppenweise, also achsweise oder seitenweise vorgeschalteten kombinierten Einlassventilen/ Auslassventilen auf. Außerdem weist die Luftfederungsanlage eine Sensoranordnung mit jeweils einem nahe jeder der Luftfedern angeordneten Wegsensor zur Messung der jeweiligen Fahrwerkshöhe und jeweils einem an den Federbalg jeder der Luftfedern angeschlossenen Drucksensor zur Messung des jeweiligen Balgdrucks auf. Es handelt sich somit bevorzugt um eine Luftfederungsanlage mit einer sogenannten Vierpunktregelung, bei welcher die Fahrwerkshöhen und Balgdrücke an allen Fahrzeugachsen und Fahrzeugseiten unabhängig voneinander einstellbar sind. Es kann sich jedoch auch um eine Luftfederungsanlage mit einer sogenannten Dreipunktregelung ohne ein Querdrosselventil handeln, bei der die Fahrwerkshöhen an der Vorderachse mit nur einem Wegsensor gemessen werden.

Die Einstellung der Fahrwerkshöhen und Balgvolumina erfolgt üblicherweise anhand der sensorisch gemessenen Fahrwerkshöhen durch ein Belüften oder Entlüften der Luftfedern innerhalb einer vorgegebenen Höhentoleranz. Wird die vorgesehene Fahrwerkshöhe an einer Luftfeder um mehr als die vorgegebene Höhentoleranz unterschritten, so wird die betreffende Luftfeder belüftet und dadurch die Fahrwerkshöhe, also der Abstand zwischen einem Fahrwerksbauteil und dem Fahrzeugrahmen vergrößert. Bei einer Überschreitung der vorgesehenen Fahrwerkshöhe um mehr als die vorgegebene Höhentoleranz wird die betreffende Luftfeder entlüftet und dadurch die Fahrwerkshöhe, also der Abstand zwischen einen Fahrwerksbauteil und dem Fahrzeugrahmen, verringert.

Sofern die Korrektur der Fahrwerkshöhen auf einer unebenen Fahrbahn oder bei seitlich ungleicher Lastverteilung erfolgt, stellen sich zwangsläufig unterschiedliche Balgdrücke an den Fahrzeugachsen ein. Dies wirkt sich an der Vorderachse insbesondere bei Omnibussen, die einen relativ verwindungssteifen Fahrzeugrahmen aufweisen, in einem verschlechterten Lenkverhalten aus. Zudem haben unterschiedliche Balgdrücke an der Vorderachse meistens auch unterschiedliche Radlasten zur Folge, durch die sich unterschiedliche Abrollradien an den Rädern einstellen. Dadurch wird das Bremsverhalten ungünstig beeinflusst. Außerdem werden über die zugeordneten Raddrehzahlsensoren unterschiedliche Raddrehzahlen gemessen, welche bei einer Geradeausfahrt irrtümlich als Kurvenfahrt interpretiert werden können.

Der vorliegenden Erfindung liegt daher die Aufgabe zugrunde, ein Verfahren zur Steuerung einer Luftfederungsanlage eines Fahrzeugs der genannten Bauart vorzustellen, mit dem das Lenk- und Bremsverhalten des zugehörigen Fahrzeugs verbessert wird.

Diese Aufgabe wird durch ein Verfahren gelöst, welches die Merkmale des Anspruchs 1 aufweist. Vorteilhafte Ausgestaltungen und Weiterbildungen des erfindungsgemäßen Steuerungsverfahrens sind in den abhängigen Ansprüchen definiert.

Demnach betrifft die Erfindung ein Verfahren zur Steuerung einer Luftfederungsanlage eines Fahrzeugs hinsichtlich der Verbesserung seines Lenk- und Bremsverhaltens. Das Fahrzeug weist eine luftgefederte Vorderachse und mindestens eine luftgefederte Hinterachse auf. Beidseitig an jeder der luftgefederten Fahrzeugachsen weist das Fahrzeug jeweils zwischen einem Fahrwerksbauteil und einem Fahrzeugrahmen angeordnete Luftfedern mit jeweils einem druckluftgefüllten Federbalg auf. Das Fahrzeug weist auch eine Ventilanordnung auf, in der jeder der Luftfedern ein Absperrventil zugeordnet ist und den Absperrventilen kombinierte Einlass-/Auslassventile gruppenweise vorgeschaltet sind. Schließlich weist das Fahrzeug eine Sensoranordnung mit jeweils einem nahe an jeder der Luftfedern angeordneten Wegsensor zur Messung der jeweiligen Fahrwerkshöhe sowie mit jeweils einem an den Federbalg jeder der Luftfedern angeschlossenen Drucksensor zur Messung des jeweiligen Balgdrucks $p_{FAL}$, $p_{FAR}$ auf.

Zur Lösung der gestellten Aufgabe ist vorgesehen, dass die Balgdrücke $p_{FAL}$, $p_{FAR}$ der Luftfedern an der Vorderachse miteinander verglichen werden, sodass aus den Balgdrücken $p_{FAL}$, $p_{FAR}$ ein höherer Balgdruck und ein niedrigerer Balgdruck ermittelt wird, und dass dann, wenn eine ermittelte Balgdruckdifferenz $dp_{FA} = p_{FAL} - p_{FAR}$ der Balgdrücke $p_{FAL}$, $p_{FAR}$ der Luftfedern der Vorderachse eine vorgegebene Differenzdrucktoleranz $\Delta p_{Tol}$ überschritten hat ($| dp_{FA} | = | p_{FAL} - p_{FAR} | > | \Delta p_{Tol} |$), die Luftfeder der Vorderachse mit dem höheren Balgdruck $p_{FAR}$; $p_{FAL}$ sowie die dazu diagonal gegenüber angeordnete Luftfeder der Hinterachse entlüftet werden und die Luftfeder der Vorderachse mit dem niedrigeren Balgdruck $p_{FAR}$; $p_{FAL}$ sowie die diagonal gegenüber angeordnete Luftfeder der Hinterachse belüftet werden.

Die hier und im Folgenden verwendeten Indizes folgen der folgenden Konvention: FA steht für die Frontachse, RA steht für die Hinterachse. L steht für links (an dem Fahrzeug), R steht für rechts (an dem Fahrzeug). Die Indizes können kombiniert werden, sodass beispielsweise $p_{FAL}$ den Balgdruck an der linken Luftfeder der Vorderachse bezeichnet.

Durch die diagonale Belüftung der einen Gruppe der Luftfedern mit der unter dem niedrigeren Balgdruck stehenden Luftfeder der Vorderachse sowie die diagonale Entlüftung der anderen Gruppe von Luftfedern mit der unter dem höheren Balgdruck stehenden Luftfeder der Vorderachse wird die Balgdruckdifferenz $dp_{FA}$ an der Vorderachse FA reduziert und damit das Lenk- und Bremsverhalten des Fahrzeugs verbessert, ohne dadurch die mittlere Fahrwerkshöhe der Fahrzeugachsen, also den mittleren Abstand des Fahrzeugrahmens von einem Fahrwerksbauteil, wie beispielsweise einem Querlenker oder Längslenker desselben, wesentlich zu verändern.

Die Veränderung eines Balgdrucks einer einzigen Luftfeder hat aufgrund fahrwerkstechnischer Koppelelemente, wie zum Beispiel eines Querstabilisators, auch Auswirkungen auf die Fahrwerkshöhe an der anderen Seite der betreffenden Fahrzeugachse. Ebenso werden durch die Veränderung der mittleren Fahrwerkshöhe an einer Fahrzeugachse auch die Längsneigung und Querneigung sowie die Achslastverteilung und die Radlastverteilung des Fahrzeugs verändert. Diese unerwünschten Effekte werden durch die diagonale Belüftung und Entlüftung der Luftfedern vermieden oder zumindest stark begrenzt.

Die Differenzdrucktoleranz $\Delta p_{Tol}$ für die Balgdruckdifferenz $dp_{FA}$ an der Vorderachse kann vorliegend beispielsweise auf maximal +/- 100 kPa einschließlich der Bereichsgrenze festgelegt sein ($\Delta p_{Tol}$ = +/- 100 kPa). Der Wert für diese Differenzdrucktoleranz $\Delta p_{Tol}$ kann jedoch bei verschiedenen Anwendungsfällen jeweils unterschiedlich sein.

Der Ausgleich der Balgdruckdifferenz $dp_{FA}$ an der Vorderachse FA kann schrittweise in mehreren zeitlich beabstandeten Impulssequenzen durchgeführt werden, zwischen denen jeweils eine kurze Beruhigungsphase zur Einstellung eines Gleichgewichtszustands des Fahrwerks liegt. Aufgrund des gruppenweisen, also achsweisen oder seitenweisen, Anschlusses der Luftfedern über die Absperrventile an die zugeordneten kombinierten Einlass-/Auslassventile kann die Entlüftung der einen Gruppe von Luftfedern und die Belüftung der anderen Gruppe von Luftfedern nicht gleichzeitig erfolgen. Daher ist vorgesehen, dass in jeder Impulssequenz jeweils zuerst die Belüftung der einen Luftfedern durch eine impulsartige Umschaltung der kombinierten Einlass-/Auslassventile und eine gleichzeitige Öffnung der zugeordneten Absperrventile (hier als erste Absperrventile bezeichnet) sowie unmittelbar danach die Entlüftung der anderen Luftfedern durch eine impulsartige Öffnung der zugeordneten Absperrventile (hier als zweite Absperrventile bezeichnet) erfolgt.

Die Dauer der impulsartigen Umschaltung der kombinierten Einlass-/Auslassventile und der Öffnung der (ersten) Absperrventile der einen Gruppe von Luftfedern und die Dauer der impulsartigen Öffnung der (zweiten) Absperrventile der anderen Gruppe von Luftfedern kann jeweils in Abhängigkeit von den aktuellen Balgdrücken $p_{FAL}$, $p_{FAR}$, $p_{RAL}$, $p_{RAR}$ und vorgegebenen Ziel-Balgdrücken $p_{FAL\_soll}$, $p_{FAR\_soll}$, $p_{RAL\_soll}$, $p_{RAR\_soll}$ der Luftfedern derart bestimmt werden, dass die Fahrwerkshöhen $h_{FAL}$, $h_{FAR}$, $h_{RAL}$, $h_{RAR}$ während der Impulssequenzen zugeordnete Soll-Fahrwerkshöhen $h_{FA\_soll}$, $h_{RA\_soll}$ innerhalb einer vorgegebenen Höhentoleranz $\Delta h_{Tol}$ einhalten können.

Die Höhentoleranz $\Delta h_{Tol}$ für die Luftfedern der Vorderachse FA und der Hinterachse RA kann einschließlich der Bereichsgrenze beispielsweise auf maximal $\Delta h_{Tol}$ = +/- 10 mm festgelegt sein.

Aufgrund der Wechselwirkung zwischen den Fahrwerkshöhen $h_{FAL}$, $h_{FAR}$, $h_{RAL}$, $h_{RAR}$ und den Balgdrücken $p_{FAL}$, $p_{FAR}$, $p_{RAL}$, $p_{RAR}$ der Luftfedern kann es durch eine Impulssequenz dennoch zu einer Überschreitung der Höhentoleranz $\Delta h_{Tol}$ an mindestens einer der Luftfedern kommen. Daher kann es vorgesehen sein, dass mindestens eine der Fahrwerkshöhen $h_{FAL}$, $h_{FAR}$, $h_{RAL}$, $h_{RAR}$ jeweils nach einer Impulssequenz während eines normalen Niveauregelungsvorgangs korrigiert wird, sofern die betreffende Fahrwerkshöhe (zum Beispiel $h_{FAL}$) die zugeordnete Soll-Fahrwerkshöhe $h_{FA\_soll}$ um mehr als die Höhentoleranz $\Delta h_{Tol}$ überschritten oder

unterschritten hat ($h_{ix}$ > $h_{i\_soll}$ + $\Delta h_{Tol}$ $h_{ix}$ < $h_{i\_soll}$ - $\Delta h_{Tol}$, wobei der Index i hier für FA (Vorderachse) oder RA (Hinterachse) stehen soll und der Index x für links (L) oder rechts (R), sodass die obige Gleichung beispielhaft für die Fahrwerkshöhe an der linken Vorderachse lauten kann: $h_{FAL}$ > $h_{FA\_soll}$ + $\Delta h_{Tol}$ $h_{FAL}$ < $h_{FA\_soll}$ - $\Delta h_{Tol}$).

Um den Einfluss dynamischer Radlaständerungen, die beispielsweise durch Fahrspurwechsel verursacht werden können, auf den Ausgleich der Balgdruckdifferenz $dp_{FA}$ an der Vorderachse auszuschließen, können die von den Drucksensoren erfassten Balgdrücke $p_{FAL}$, $p_{FAR}$, $p_{RAL}$, $p_{RAR}$ tiefpassgefiltert werden.

Um eine Verstellung der Balgdrücke aufgrund dynamischer Radlaständerungen zu vermeiden, ist es möglich, dass der Ausgleich der Balgdruckdifferenz $dp_{FA}$ an der Vorderachse nur während einer Geradeausfahrt erfolgt und bei einer Kurvenfahrt unterbleibt. Eine Kurvenfahrt kann zum Beispiel mittels eines Lenkwinkelsensors und/oder eines Querbeschleunigungssensors sensorisch ermittelt werden.

Wenn die Verwindung des Fahrwerks, die durch den Unterschied der Fahrwerkshöhendifferenzen zwischen der Vorderachse und der Hinterachse gegeben ist ($dh_{FA}$ - $dh_{RA}$; $dh_{FA}$ = $h_{FAL}$ - $h_{FAR}$; $dh_{RA}$ = $h_{RAL}$ - $h_{RAR}$), schon sehr groß ist und durch den Ausgleich der Balgdruckdifferenz $dp_{FA}$ an der Vorderachse noch vergrößert werden könnte, kann vorteilhaft auf den Ausgleich der Balgdruckdifferenz $dp_{FA}$ verzichtet werden. Zu diesem Zweck kann daher vorgesehen sein, dass in der beschriebenen Situation der Ausgleich der Balgdruckdifferenz $dp_{FA}$ an der Vorderachse unterbleibt, wenn die Verwindung $dh_{FA}$ - $dh_{RA}$ der Fahrzeugachsen das Doppelte der Höhentoleranz $\Delta h_{Tol}$ erreicht oder überschritten hat

$$( | \, dh_{FA} - dh_{RA} \, | \geq | \, 2 \cdot \Delta h_{Tol} \, | ).$$

Um vor jeder Fahrt möglichst ein ausgeglichenes, verwindungsfreies Fahrwerk zur Verfügung zu haben, kann es vorgesehen sein, dass das Fahrzeug in einer Parksituation, die beispielsweise dadurch, dass eine Fahrgeschwindigkeit null beträgt, durch ein in den Leerlauf geschaltetes Fahrgetriebe und/oder durch eine eingelegte Parkbremse erkannt werden kann, durch eine entsprechende Anpassung der Balgdrücke $p_{FAL}$, $p_{FAR}$, $p_{RAL}$, $p_{RAR}$ der Luftfedern horizontal ausgerichtet wird, sofern mittels mindestens einen Neigungssensors ein ebener Fahrweg als Standort des Fahrzeugs festgestellt wird.

Die Erfindung wird nachstehend anhand eines in der beigefügten Zeichnung dargestellten Ausführungsbeispiels näher erläutert. In der Zeichnung zeigt

Fig. 1 eine maximale Verwindung eines Fahrzeugfahrwerks in einer schematischen Ansicht, bei der ein Verfahrensablauf eines erfindungsgemäßen Verfahrens zum Ausgleich einer Balgdruckdifferenz an einer Vorderachse eines Fahrzeugs gestartet wird,

Fig. 2 zeitliche Verläufe von Schaltzuständen von Steuerungsventilen, Fahrwerkshöhen und der Balgdruckdifferenz an der Vorderachse eines Fahrzeugs in einem Diagramm,

Fig. 3 eine Abhängigkeit zwischen der Balgdruckdifferenz an der Vorderachse und einem Unterschied von Fahrwerkshöhendifferenzen an den Fahrzeugachsen in einem Diagramm,

Fig. 4 eine Abhängigkeit zwischen der Balgdruckdifferenz an der Vorderachse und einem Unterschied von Balgdruckdifferenzen an den Fahrzeugachsen in einem Diagramm,

Fig. 5 eine erste Ausführungsform einer Luftfederungsanlage zur Anwendung des erfindungsgemäßen Verfahrens in einer schematischen Ansicht, und

Fig. 6 eine zweite Ausführungsform einer Luftfederungsanlage zur Anwendung des erfindungsgemäßen Verfahrens in einer schematischen Ansicht.

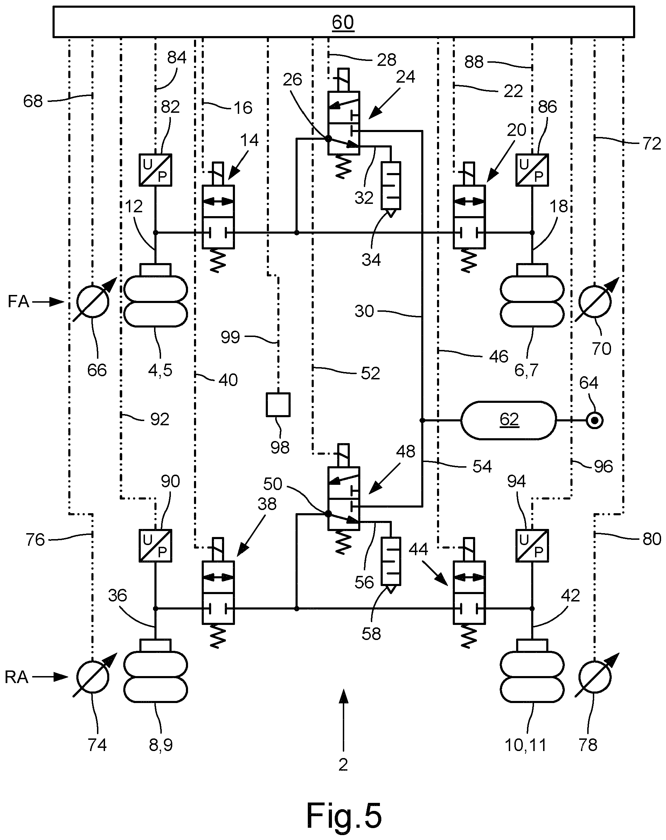

In Fig. 5 ist in einer schematischen Schaltplandarstellung eine Ausführungsform einer Luftfederungsanlage 2 eines zweiachsigen Fahrzeugs 1 mit einer luftgefederten Vorderachse FA und einer luftgefederten Hinterachse RA abgebildet, bei welcher das erfindungsgemäße Steuerungsverfahren beispielhaft anwendbar ist. An jeder der beiden Fahrzeugachsen FA, RA ist beidseitig jeweils zwischen einem nicht dargestellten Fahrwerksbauteil und einem nicht dargestellten Fahrzeugrahmen eine Luftfeder 4, 6; 8, 10 mit einem druckluftgefüllten Federbalg 5, 7; 9, 11 angeordnet.

Die Federbälge 5, 7 der Luftfedern 4, 6 an der Vorderachse FA sind jeweils über eine erste Anschlussleitung 12 beziehungsweise eine zweite Anschlussleitung 18 und ein erstes Absperrventil 14 beziehungsweise ein zweites Absperrventil 20 an einen Arbeitsanschluss 26 eines ersten kombinierten Einlass-/Auslassventils 24 angeschlossen. Die beiden Absperrventile 14, 20 sind als 2/2-Wege-Magnetschaltventile ausgebildet, welche über eine erste elektrische Steuerleitung 16 beziehungsweise eine zweite elektrische Steuerleitung 22 mit einer elektronischen Steuereinheit 60 verbunden sowie im unbetätigten, also unbestromten, Zustand geschlossen sind. Das erste Einlass-/Auslassventil 24 ist als ein 3/2-Wege-Magnetschaltventil ausgebildet, welches über eine dritte elektrische Steuerleitung 28 mit der elektronischen Steuereinheit 60 verbunden ist. Mittels des ersten Einlass-/Auslassventils 24 sind dessen Arbeitsanschluss 26 und damit die beiden Anschlussleitungen 12, 18 der Luftfedern 4, 6 wechselweise mit einer ersten druckführenden Versorgungsleitung 30 oder einer drucklosen ersten Entlüftungsleitung 32 verbindbar. Die Versorgungsleitung 30 ist über einen Druckluftspeicher 62 an eine Druckluftquelle 64 angeschlossen. Die erste Entlüftungsleitung 32 führt über einen ersten Schalldämpfer 34 in die Umgebung.

Im unbetätigten, also unbestromten, Zustand des ersten Einlass-/Auslassventils 24 ist dessen Arbeitsanschluss 26 mit der ersten Entlüftungsleitung 32 verbunden, sodass die Federbälge 5, 7 der Luftfedern 4, 6 an der Vorderachse FA nur durch das Öffnen der jeweils zugeordneten Absperrventile 14, 20 entlüftet werden können. Um die Federbälge 5, 7 der Luftfedern 4, 6 an der Vorderachse FA zu belüften, ist dagegen sowohl das Umschalten des ersten Einlass-/Auslassventils 24 als auch das Öffnen der jeweiligen Absperrventile 14, 20 erforderlich.

In gleicher Weise sind die Federbälge 9, 11 der beiden Luftfedern 8, 10 an der Hinterachse RA jeweils über eine dritte Anschlussleitung 36 beziehungsweise eine vierte Anschlussleitung 42 und ein drittes Absperrventil 38 beziehungsweise ein viertes Absperrventil 44 an den Arbeitsanschluss 50 eines zweiten Einlass-/Auslassventils 48 angeschlossen. Auch diese beiden Absperrventile 38, 44 sind als 2/2-Wege-Magnetschaltventile ausgebildet, welche über eine vierte Steuerleitung 40 beziehungsweise eine fünfte elektrische Steuerleitung 46 mit der elektronischen Steuereinheit 60 verbunden sowie im unbetätigten, also unbestromten, Zustand geschlossen sind. Das zweite Einlass-/Auslassventil 48 ist als ein 3/2-Wege-Magnetschaltventil ausgebildet, welches über eine sechste elektrische Steuerleitung 52 mit der elektronischen Steuereinheit 60 verbunden ist. Mittels des zweiten Einlass-/Auslassventil 48 sind dessen Arbeitsanschluss 50 und damit die dritte beziehungsweise vierte Anschlussleitung 36, 42 der Luftfedern 8, 10 an der Hinterachse RA wechselweise mit einer zweiten druckführenden Versorgungsleitung 54 oder einer zweiten drucklosen Entlüftungsleitung 56 verbindbar. Die zweite Versorgungsleitung 54 ist über den bereits erwähnten Druckluftspeicher 62 an die Druckluftquelle 64 angeschlossen. Die zweite Entlüftungsleitung 56 führt über einen zweiten Schalldämpfer 58 in die Umgebung.

Im unbetätigten, also unbestromten Zustand des zweiten Einlass-/Auslassventils 48 ist dessen Arbeitsanschluss 50 mit der zweiten Entlüftungsleitung 56 verbunden, sodass die Federbälge 9, 11 der hinteren Luftfedern 8, 10 nur durch das Öffnen des dritten Absperrventils 38 beziehungsweise des vierten Absperrventils 44 entlüftet werden können. Um die Federbälge 9, 11 der Luftfedern 8, 10 an der Hinterachse RA zu belüften ist dagegen sowohl das Umschalten des zweiten Einlass-/Auslassventils 48 als auch das Öffnen der beiden zugeordneten Absperrventile 38, 44 erforderlich.

Zur Messung der lokalen Fahrwerkshöhen $h_{FAL}$, $h_{FAR}$, $h_{RAL}$, $h_{RAR}$, also dem jeweiligen Abstand des Fahrzeugrahmens von einen Fahrwerksbauteil, ist nahe der vier Luftfedern 4, 6, 8, 10 jeweils ein Wegsensor 66, 70, 74, 78 angeordnet, wobei die Wegsensoren 66, 70, 74, 78 über eine erste bis vierte elektrische Sensorleitung 68, 72, 76, 80 mit der elektronischen Steuereinheit 60 verbunden sind. Zur Messung des jeweiligen Balgdrucks $p_{FAL}$, $p_{FAR}$, $p_{RAL}$, $p_{RAR}$ in den Federbälgen 5, 7, 9, 11 der vier Luftfedern 4, 6, 8, 10 ist an jede Luftfeder 4, 6, 8, 10 beziehungsweise an die jeweils zugeordnete Anschlussleitung 12, 18, 36, 42 jeweils ein Drucksensor 82, 86, 90, 94 (erster bis vierter Drucksensor 82, 86, 90, 94) angeschlossen, wobei die Drucksensoren 82, 86, 90, 94 jeweils über eine Sensorleitung 84, 88, 92, 96 (fünfte bis achte elektrische Sensorleitung 84, 88, 92, 96) mit der elektronischen Steuereinheit 60 verbunden sind.

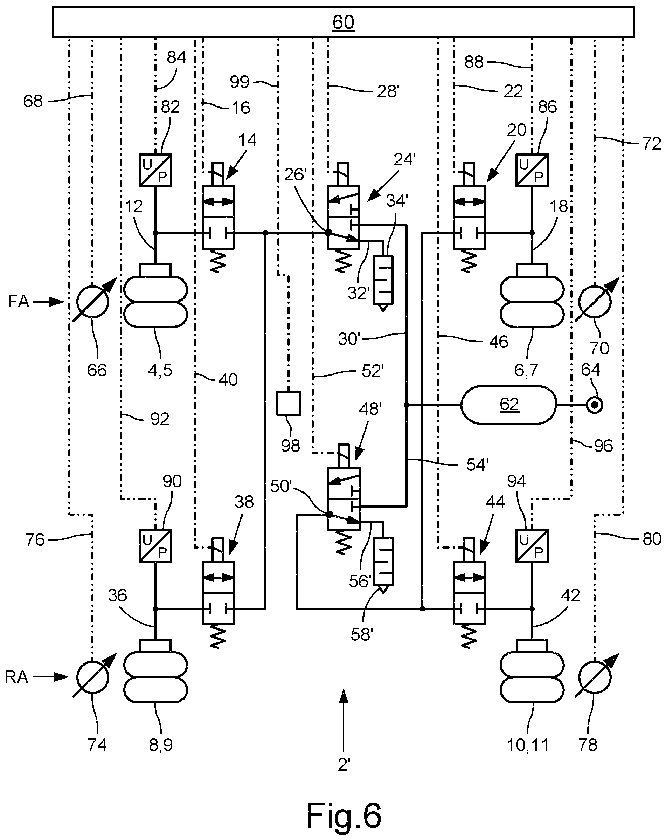

Eine in Fig. 6 abgebildete Ausführungsform einer Luftfederungsanlage 2' eines zweiachsigen Fahrzeugs mit zwei luftgefederten Fahrzeugachsen FA, RA, bei der das erfindungsgemäße Steuerungsverfahren ebenfalls anwendbar ist, unterscheidet sich nur hinsichtlich der Zuordnung der Luftfedern 4, 6, 8, 10 zu den Einlass-/Auslassventilen 24, 48; 24', 48' von der Ausführungsform der Luftfederungsanlage 2 gemäß Fig. 5.

Im Folgenden wird auf "links" und "rechts" Bezug genommen. Die Angaben "links" und "rechts" beziehen sich auf die Darstellung in Fig. 6 und können sich gleichzeitig auf eine Anordnung in dem Fahrzeug 1 beziehen.

Hierbei sind der Federbalg 5 der linken Luftfeder 4 an der Vorderachse FA und der Federbalg 9 der linken Luftfeder 8 an der Hinterachse RA jeweils über eine Anschlussleitung 12, 36 und ein Absperrventil 14, 38 an den Arbeitsanschluss 26' eines ersten Einlass-/Auslassventils 24' angeschlossen. Auch hier ist das erste Einlass-/Auslassventil 24' als ein 3/2-Wege-Magnetschaltventil ausgebildet, welches über eine dritte elektrische Steuerleitung 28' mit der elektronischen Steuereinheit 60 verbunden ist.

Über dieses erste Einlass-/Auslassventil 24' sind dessen Arbeitsanschluss 26' und damit die genannten Anschlussleitungen 12, 36 der linksseitigen Luftfedern 4, 8 wechselweise mit einer druckführenden Versorgungsleitung 30' oder einer drucklosen ersten Entlüftungsleitung 32' verbindbar. Die Versorgungsleitung 30' ist über einen Druckluftspeicher 62 an eine Druckluftquelle 64 angeschlossen. Die erste Entlüftungsleitung 32' führt über einen ersten Schalldämpfer 34' in die Umgebung. Im unbetätigten, also unbestromten, Zustand des ersten Einlass-/Auslassventils 24' ist dessen Arbeitsanschluss 26' mit der ersten Entlüftungsleitung 32' verbunden, sodass die Federbälge 5, 9 der links am Fahrzeug 1 angeordneten Luftfedern 4, 8 nur durch das Öffnen der beiden zugeordneten Absperrventile 14, 38 entlüftet werden können. Um die Federbälge 5, 9 der Luftfedern 4, 8 an der linken Fahrzeugseite zu belüften, ist dagegen sowohl das Umschalten des Einlass-/Auslassventils 24' als auch das Öffnen der zugeordneten Absperrventile 14, 38 erforderlich.

Ebenso sind der Federbalg 7 der rechts an der Vorderachse FA angeordneten Luftfeder 6 und der Federbalg 11 der rechts an der Hinterachse RA angeordneten Luftfeder 10 über jeweils eine Anschlussleitung 18, 42 und über jeweils ein Absperrventil 20, 44 an den Arbeitsanschluss 50' eines zweiten Ein-/Auslassventils 48' angeschlossen. Auch hier ist das zweite Einlass-/Auslassventil 48' als ein 3/2-Wege-Magnetschaltventil ausgebildet, welches über eine sechste elektrische Steuerleitung 52' mit der elektronischen Steuereinheit 60 verbunden ist.

Über das zweite Einlass-/Auslassventil 48' sind dessen Arbeitsanschluss 50' und damit die beiden Anschlussleitungen 18, 42 der beiden rechtsseitigen Luftfedern 6, 10 wechselweise mit einer druckführenden zweiten Versorgungsleitung 54' oder einer drucklosen Entlüftungsleitung 56' verbindbar. Die zweite Versorgungsleitung 54' ist über den Druckluftspeicher 62 an die Druckluftquelle 64 angeschlossen. Die Entlüftungsleitung 56' führt über einen Schalldämpfer 58' in die Umgebung. Im unbetätigten, also unbestromten Zustand des zweiten Einlass-/Auslassventils 48' ist dessen Arbeitsanschluss 50' mit der Entlüftungsleitung 56' verbunden, so dass die beiden Federbälge 7, 11 der rechtsseitigen Luftfedern 6, 10 nur durch das Öffnen der jeweils zugeordneten Absperrventile 20, 44 entlüftet werden können. Um die Federbälge 7, 11 der rechtsseitigen Luftfedern 6, 10 zu belüften, ist dagegen sowohl das Umschalten des zweiten Einlass-/Auslassventils 48' als auch das Öffnen der zugeordneten Absperrventile 20, 44 erforderlich.

Die Luftfederungsanlage 2 gemäß Fig. 5 und die Luftfederungsanlage 2' gemäß Fig. 6 verfügen auch über einen Neigungssensor 98, welcher über eine neunte Sensorleitung 99 mit der elektronischen Steuereinheit 60 verbunden ist. Mittels dieses Neigungssensors 98 kann festgestellt werden, ob sich das Fahrzeug 1 auf einem ebenen Fahrweg befindet. Auf der Grundlage der von dem Neigungssensor 98 an die elektronische Steuereinheit 60 gelieferten Information über die Lage des Fahrzeugs 1 kann das Fahrzeug 1 mittels der Luftfederungsanlage 2, 2', beispielsweise in einer Parksituation, durch eine entsprechende Anpassung der Balgdrücke $p_{FAL}$, $p_{FAR}$, $p_{RAL}$, $p_{RAR}$ der Federbälge 5, 7, 9, 11 der Luftfedern 4, 6; 8, 10 gerade gestellt werden, also vorzugsweise parallel zum Fahrweg oder parallel zu einer Horizontalen ausgerichtet werden.

Das erfindungsgemäße Verfahren zur Steuerung einer Luftfederungsanlage 2, 2' eines Fahrzeugs 1, mit dem das Lenk- und Bremsverhalten des Fahrzeugs verbessert wird, sieht vor, dass diejenige Luftfeder der Vorderachse FA, welche im Vergleich mit der anderen Luftfeder an der Vorderachse FA einen höheren Balgdruck aufweist, (hier beispielsweise die rechte Luftfeder 6 an der Vorderachse FA mit dem Balgdruck $p_{FAR}$) sowie die diagonal gegenüberliegende Luftfeder der Hinterachse RA (in diesem Beispiel die linke Luftfeder 8 an der Hinterachse RA) entlüftet werden und dass diejenige Luftfeder der Vorderachse FA, welche im Vergleich mit der anderen Luftfeder der Vorderachse FA einen niedrigeren Balgdruck aufweist, (in diesem Beispiel die linke Luftfeder 4 an der Vorderachse FA mit dem Balgdruck $p_{FAL}$) sowie die diagonal gegenüberliegende Luftfeder an der Hinterachse RA (in diesem Beispiel die rechte Luftfeder 10 an der Hinterachse RA) belüftet werden, sofern die Balgdruckdifferenz $dp_{FA} = p_{FAL} - p_{FAR}$ an der Vorderachse FA eine vorgegebene Differenzdrucktoleranz $\Delta p_{Tol}$ überschritten hat

$$( |\, dp_{FA}\, | = |\, p_{FAL} - p_{FAR}\, | > |\, \Delta p_{Tol}\, | ).$$

Der beschriebene Ausgleich der Balgdruckdifferenz $dp_{FA}$ an der Vorderachse FA wird schrittweise in mehreren zeitlich beabstandeten Impulssequenzen IS-1, IS-2, IS-3, IS-4 durchgeführt. Dabei erfolgt in jeder Impulssequenz jeweils zuerst die Belüftung der einen Gruppe von Luftfedern 4, 10 durch eine impulsartige Umschaltung der Einlass-/Auslassventile 24, 48; 24', 48' sowie eine gleichzeitige Öffnung der zugeordneten Absperrventile 14, 44, und unmittelbar danach die Entlüftung der Luftfedern 6, 8 der anderen Gruppe von Luftfedern durch eine impulsartige Öffnung der zugeordneten Absperrventile 20, 38.

Die Dauer der impulsartigen Umschaltung der Einlass-/ Auslassventile 24, 48; 24', 48' und der Öffnung der Absperrventile 14, 44 der einen Gruppe von Luftfedern 4, 10 und die Dauer der impulsartigen Öffnung der Absperrventile 20, 38 der Gruppe der anderen Luftfedern 6, 8 werden jeweils in Abhängigkeit von den aktuell gemessenen Balgdrücken $p_{FAL}$, $p_{FAR}$, $p_{RAL}$, $p_{RAR}$ und von vorbestimmten Ziel-Balgdrücke $p_{FAL\_soll}$, $p_{FAR\_soll}$, $p_{RAL\_soll}$, $p_{RAR—soll}$ der Luftfedern 4, 6, 8, 10 derart bestimmt, dass die Fahrwerkshöhen $h_{FAL}$, $h_{FAR}$, $h_{RAL}$, $h_{RAR}$ während der Impulssequenzen IS-1, IS-2, IS-3, IS-4 die zugeordneten Soll-Fahrwerkshöhen $h_{FA\_soll}$, $h_{RA\_soll}$ innerhalb einer vorgegebenen Höhentoleranz $\Delta h_{Tol}$ einhalten.

Zwischen den einzelnen Impulssequenzen IS-1, IS-2, IS-3, IS-4 ist jeweils eine kurze Beruhigungsphase zur Einstellung eines Gleichgewichtszustands des Fahrwerks vorgesehen. Nach einer Impulssequenz IS-1, IS-2, IS-3, IS-4 wird mindestens eine der Fahrwerkshöhen $h_{FAL}$, $h_{FAR}$, $h_{RAL}$, $h_{RAR}$ im Rahmen der normalen Niveauregelung korrigiert, sofern die betreffende Fahrwerkshöhe (zum Beispiel die Fahrwerkshöhe $h_{FAL}$ an der linken Vorderachse) die zugeordnete Soll-Fahrwerkshöhe $h_{FA\_soll}$ um mehr als die Höhentoleranz $\Delta h_{Tol}$ überschritten ($h_{FAL} > h_{FA\_soll} + \Delta h_{Tol}$) oder unterschritten

$$( h_{FAL} < h_{FA\_soll} - \Delta h_{Tol}) \text{ hat.}$$

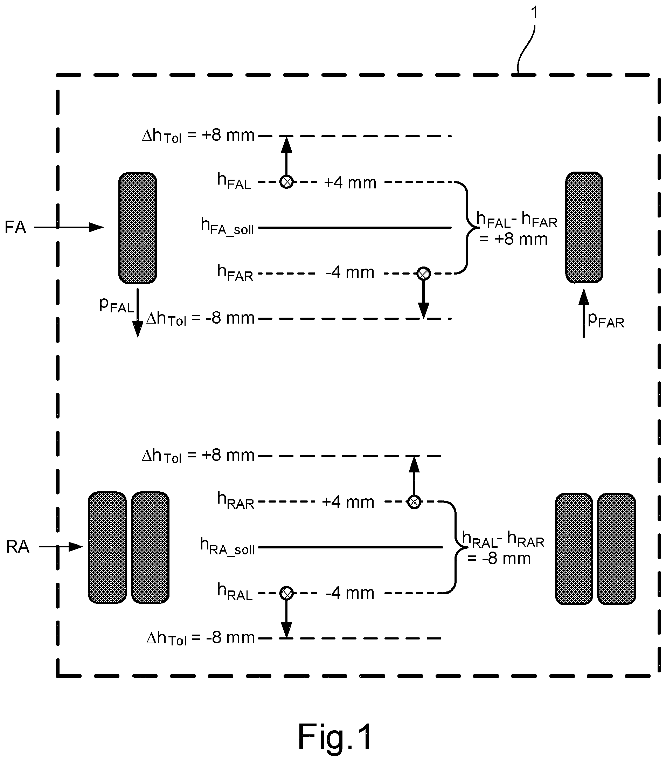

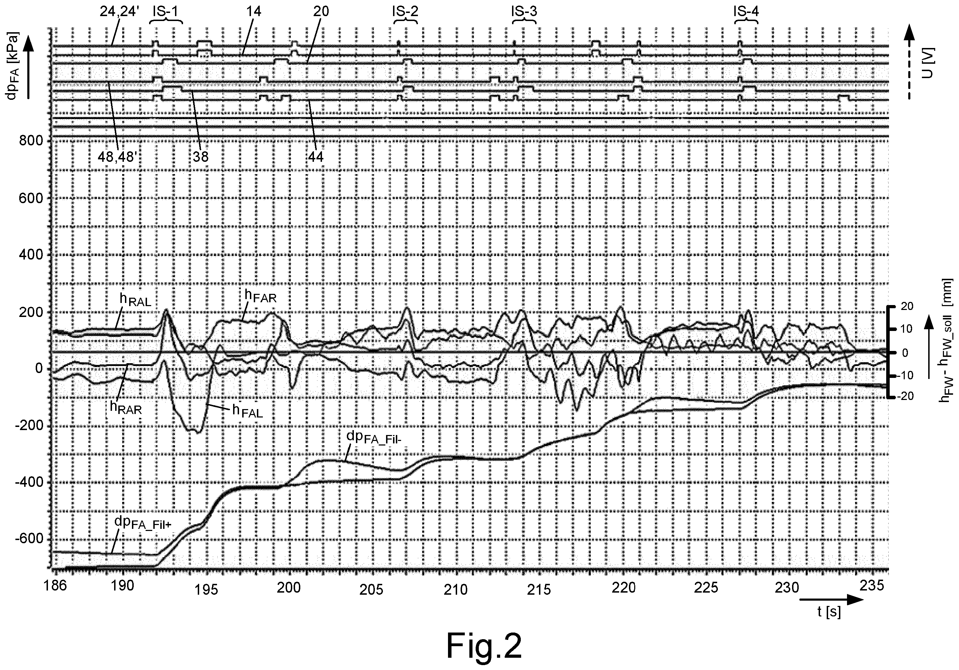

In Fig. 1 ist in einer schematischen Ansicht die maximale Verwindung eines Fahrzeugfahrwerks dargestellt, bei welcher ein Verfahrensablauf des erfindungsgemäßen Verfahrens zum Ausgleich einer Balgdruckdifferenz an der Vorderachse eines Fahrzeugs gestartet wird. Fig. 2 veranschaulicht einen solchen Verfahrensablauf zum Ausgleich einer größeren Balgdruckdifferenz ($dp_{FA} = p_{FAL} - p_{FAR}$) an der Vorderachse FA eines Fahrzeugs 1 mittels aufgezeichneter Messwerte.

Gemäß der schematischen Ansicht in Fig. 1 besteht entsprechend den dortigen Kreisen mit jeweils angesetztem Pfeil vor dem Ausgleich der Balgdruckdifferenz $dp_{FA}$ an der Vorderachse FA bereits eine Fahrwerkshöhendifferenz $dh_{FA}$ zwischen linker Seite von $h_{FAL} = +4$ mm und der rechter Seite von $h_{FAR} = -4$ mm, also $dh_{FA} = h_{FAL} - h_{FAR} = +8$ mm. Ebenso besteht an der Hinterachse RA gemäß den dortigen Kreisen mit jeweils angesetztem Pfeil eine Fahrwerkshöhendifferenz $dh_{RA}$ zwischen der linken Seite von $h_{RAL} = -4$ mm und der rechten Seite von $h_{RAR} = +4$ mm, also von insgesamt von $dh_{RA} = h_{RAL} - h_{RAR} = -8$ mm.

Da die Abweichungen der Fahrwerkshöhen $h_{FAL}$, $h_{FAR}$, $h_{RAL}$, $h_{RAR}$ im Vergleich mit den jeweiligen Soll-Fahrwerkshöhen $h_{FA\_soll}$, $h_{RA\_soll}$ an beiden Fahrzeugachsen FA, RA jeweils innerhalb der Höhentoleranz von hier $\Delta h_{Tol} = +/- 8$ mm liegen, kann das Verfahren zum Ausgleich der Balgdruckdifferenz $dp_{FA}$ an der Vorderachse FA bis zum Erreichen der Toleranzgrenzen ($h_{FA} = h_{FA\_soll} +/- \Delta h_{Tol}$; $h_{RA} = h_{RA\_soll} +/- \Delta h_{Tol}$) durchgeführt werden. Dabei ist $h_{FA}$ die erreichte Fahrwerkshöhe an der Vorderachse FA und $h_{RA}$ die erreichte Fahrwerkshöhe an der Hinterachse RA.

In dem in Fig. 2 dargestellten Diagramm sind in diesem von oben nach unten dargestellt die zeitlichen Verläufe der Schaltzustände der Steuerungsventile 14, 20, 24, 24', 38, 44, 48, 48' gemäß den Figuren 5 und 6, der Fahrwerkshöhen $h_{FAL}$, $h_{FAR}$, $h_{RAL}$, $h_{RAR}$ und der Balgdruckdifferenz $dp_{FA}$ an der Vorderachse FA während eines Verfahrensablaufs für beide Ausführungsbeispiele der Luftfederungsanlage 2, 2' abgebildet. Der Schaltzustand der Steuerungsventile 14, 20, 24, 24', 38, 44, 48, 48' ist jeweils mit Ausschlag nach unten unbetätigt/unbestromt und mit Ausschlag nach oben betätigt/bestromt dargestellt. Die Fahrwerkshöhen $h_{FAL}$, $h_{FAR}$, $h_{RAL}$, $h_{RAR}$ sind jeweils als Differenz zu ihrer Soll-Fahrwerkshöhe ($h_{FW} - h_{FW\_soll}$) dargestellt. Die Kurve der Balgdruckdifferenz $dp_{FA}$ an der Vorderachse FA ist in einer stark tiefpassgefilterten Ausführung $dp_{FA\_Fil+}$ und in einer schwach tiefpassgefilterten Ausführung $dp_{FA\_Fil-}$ vorhanden. In dem Diagramm der Fig. 2 ist auf der X-Achse die Zeit in Sekunden (s) und auf der Y-Achse links die Balgdruckdifferenz $dp_{FA}$ in Kilopascal (kPa) sowie rechts die Schaltspannung U in Volt (V) und der von den Wegsensoren gemessene Weg als Differenz zur Soll-Fahrwerkshöhe ($h_{FW} - h_{FW\_soll}$) in Millimeter (mm) aufgetragen.

Zum Zeitpunkt t = 190 s besteht eine Balgdruckdifferenz $dp_{FA}$ an der Vorderachse FA zwischen dem niedrigeren Balgdruck $p_{FAL}$ in der linken Luftfeder 4 und dem höheren Balgdruck $p_{FAR}$ in der rechten Luftfeder 6 von etwa -650 kPa ($dp_{FA} = -650$ kPa), welche die Differenzdrucktoleranz $\Delta p_{Tol}$ von vorliegend +/- 100 kPa in Absolutwerte gesehen deutlich überschreitet. Diese Balgdruckdifferenz $dp_{FA}$ wird mit vier wie vorstehend beschrieben ablaufenden Impulssequenzen IS-1, IS-2, IS-3, IS-4 im zeitlichen Verlauf erfolgreich auf einen Wert von etwa -50 kPa ($dp_{FA}$ = -50 kPa) zum Zeitpunkt t = 230 s reduziert, welcher die Differenzdrucktoleranz $Ap_{Tol}$ = +/- 100 kPa deutlich unterschreitet.

Die zwischen den ersten beiden Impulssequenzen IS-1, IS-2, unmittelbar vor der dritten Impulssequenz IS-3, zwischen den letzten beiden Impulssequenzen IS-3, IS-4 und nach der letzten Impulssequenz IS-4 erkennbaren Schaltbetätigungen der Schaltventile zum Belüften und Entlüften der Luftfedern 4, 6, 8, 10 erfolgen im Rahmen der normalen Niveauregelung, sofern die betreffenden Fahrwerkshöhen ($h_{FAL}$, $h_{FAR}$, $h_{RAL}$, $h_{RAR}$) ihre Soll-Fahrwerkshöhe ($h_{FA\_soll}$, $h_{RA\_soll}$) um mehr als die Höhentoleranz $\Delta h_{Tol}$ über- oder unterschritten haben.

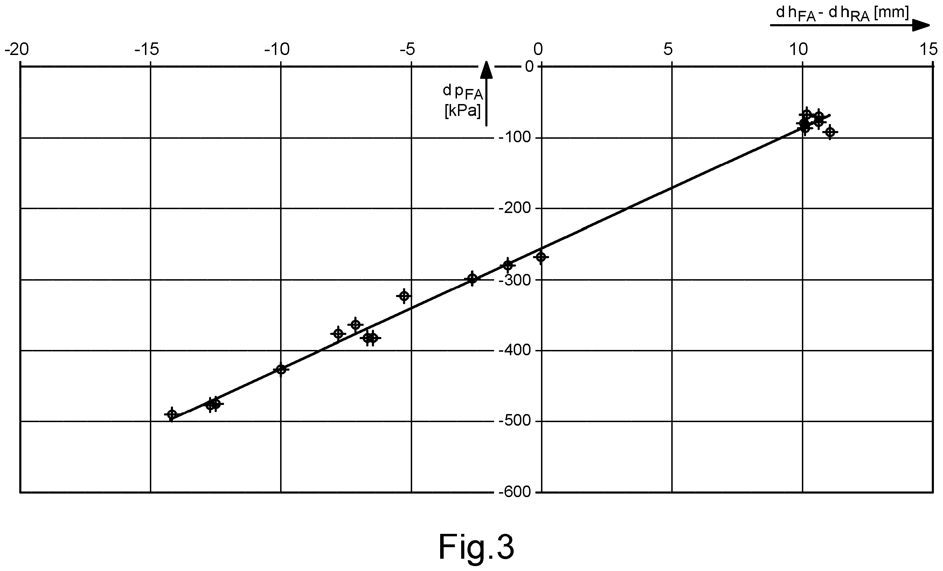

In dem Diagramm gemäß Fig. 3 ist der Zusammenhang zwischen der Balgdruckdifferenz $dp_{FA}$ an der Vorderachse FA und dem Unterschied der Fahrwerkshöhendifferenzen $dh_{FA}$ - $dh_{RA}$ an beiden Fahrzeugachsen FA, RA zu entnehmen, durch den die Verwindung des Fahrwerks des Fahrzeugs 1 gegeben ist, wobei mit $dh_{FA}$ die Fahrwerkshöhendifferenz zwischen der linken Fahrwerkshöhe $h_{FAL}$ und der rechten Fahrwerkshöhe $h_{FAR}$ an der Vorderachse FA und mit $dh_{RA}$ die Fahrwerkshöhendifferenz zwischen der linken Fahrwerkshöhe $h_{RAL}$ und der rechten Fahrwerkshöhe $h_{RAR}$ an der Hinterachse RA bezeichnet sind ($dh_{FA}$ = $h_{FAL}$ - $h_{FAR}$, $dh_{RA}$ = $h_{RAL}$ - $h_{RAR}$).

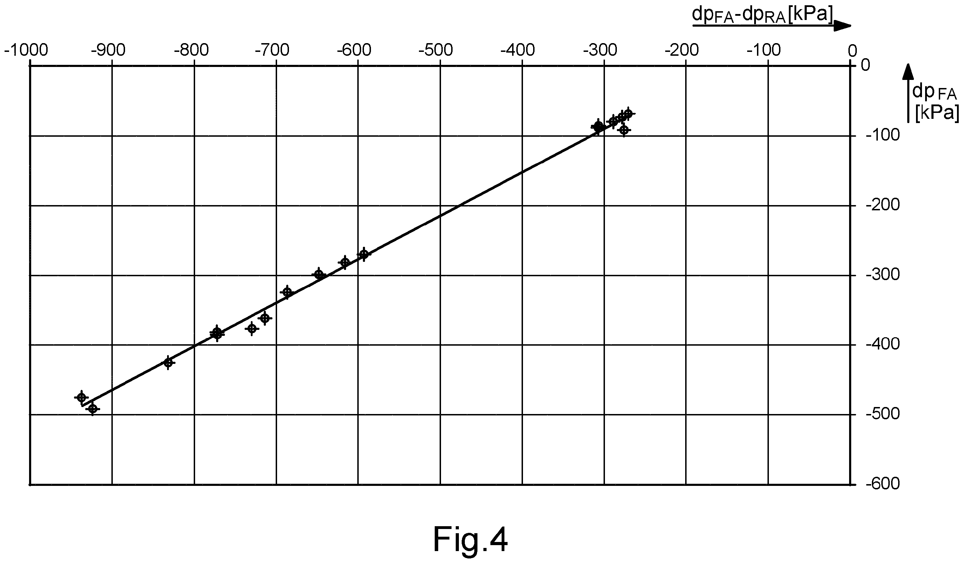

Dem Diagramm gemäß Fig. 4 ist der Zusammenhang zwischen der Balgdruckdifferenz $dp_{FA}$ an der Vorderachse FA und dem Unterschied zwischen den Balgdruckdifferenzen $dp_{FA}$ - $dp_{RA}$ an den beiden Fahrzeugachsen FA, RA zu entnehmen, wobei mit $dp_{FA}$ die Balgdruckdifferenz zwischen dem Balgdruck $p_{FAL}$ der linken Luftfeder 4 und dem Balgdruck $p_{FAR}$ der rechten Luftfeder 6 an der Vorderachse FA sowie mit $dp_{RA}$ die Balgdruckdifferenz zwischen dem Balgdruck $p_{RAL}$ der linken Luftfeder 8 und dem Balgdruck $p_{RAR}$ der rechten Luftfeder 10 an der Hinterachse RA bezeichnet sind ($dp_{FA}$ = $p_{FAL}$ - $p_{FAR}$, $dp_{RA}$ = $p_{RAL}$ - $p_{RAR}$).

Derartige lineare Zusammenhänge zwischen der Balgdruckdifferenz $dp_{FA}$ an der Vorderachse FA und dem Unterschied der Fahrwerkshöhendifferenzen $dh_{FA}$ - $dh_{RA}$ und/oder der Balgdruckdifferenzen $dp_{FA}$ - $dp_{RA}$ an beiden Fahrzeugachsen FA, RA sind typisch für Fahrzeuge mit einem relativ verwindungssteifen Fahrzeugrahmen, wie Omnibusse. Aufgrund der Wechselwirkung zwischen den Balgdrücken ($p_{FAL}$, $p_{FAR}$, $p_{RAL}$, $p_{RAR}$) und den Fahrwerkshöhen ($h_{FAL}$, $h_{FAR}$, $h_{RAL}$, $h_{RAR}$) erschweren verwindungssteife Fahrzeugrahmen einen schnellen Ausgleich der Balgdruckdifferenz $dp_{FA}$ an der Vorderachse FA.

Bezugszeichenliste (Bestandteil der Beschreibung)

| 1 | Fahrzeug |
| 2 | Luftfederungsanlage (erste Ausführungsform) |
| 2' | Luftfederungsanlage (zweite Ausführungsform) |
| 4 | Erste Luftfeder an der Vorderachse |
| 5 | Erster Federbalg |
| 6 | Zweite Luftfeder an der Vorderachse |
| 7 | Zweiter Federbalg |
| 8 | Erste Luftfeder an der Hinterachse |
| 9 | Dritter Federbalg |
| 10 | Zweite Luftfeder an der Hinterachse |
| 11 | Vierter Federbalg |
| 12 | Erste Anschlussleitung |
| 14 | Erstes Absperrventil |
| 16 | Erste Steuerleitung |
| 18 | Zweite Anschlussleitung |
| 20 | Zweites Absperrventil |
| 22 | Zweite Steuerleitung |
| 24, 24' | Erstes Einlass-/Auslassventil |
| 26, 26' | Erster Arbeitsanschluss |
| 28, 28' | Dritte Steuerleitung |
| 30, 30' | Erste Versorgungsleitung |
| 32, 32' | Erste Entlüftungsleitung |
| 34, 34' | Erster Schalldämpfer |
| 36 | Dritte Anschlussleitung |
| 38 | Drittes Absperrventil |
| 40 | Vierte Steuerleitung |
| 42 | Vierte Anschlussleitung |
| 44 | Viertes Absperrventil |
| 46 | Fünfte Steuerleitung |
| 48, 48' | Zweites Einlass-/Auslassventil |
| 50, 50' | Zweiter Arbeitsanschluss |
| 52, 52' | Sechste Steuerleitung |
| 54, 54' | Zweite Versorgungsleitung |
| 56, 56' | Zweite Entlüftungsleitung |
| 58, 58' | Zweiter Schalldämpfer |
| 60 | Elektronische Steuereinheit |
| 62 | Druckluftspeicher |
| 64 | Druckluftquelle |
| 66 | Erster Wegsensor |
| 68 | Erste Sensorleitung |
| 70 | Zweiter Wegsensor |
| 72 | Zweite Sensorleitung |
| 74 | Dritter Wegsensor |
| 76 | Dritte Sensorleitung |
| 78 | Vierter Wegsensor |
| 80 | Vierte Sensorleitung |
| 82 | Erster Drucksensor |
| 84 | Fünfte Sensorleitung |
| 86 | Zweiter Drucksensor |
| 88 | Sechste Sensorleitung |
| 90 | Dritter Drucksensor |
| 92 | Siebte Sensorleitung |
| 94 | Vierter Drucksensor |
| 96 | Achte Sensorleitung |
| 98 | Neigungssensor |
| 99 | Neunte Sensorleitung |
| FA | Vorderachse |
| $h_{FA}$ | Fahrwerkshöhe an der Vorderachse |
| $h_{FA\_soll}$ | Soll-Fahrwerkshöhe für die Luftfedern an |

der Vorderachse

| | |
|---|---|
| $h_{FAL}$ | Fahrwerkshöhe an der Luftfeder der Vorderachse links |
| $h_{FAR}$ | Fahrwerkshöhe an der Luftfeder der Vorderachse rechts |
| $h_{FW}$ | Fahrwerkshöhe (allgemein) |
| $h_{FW\_soll}$ | Soll-Fahrwerkshöhe (allgemein) |
| $h_{RA}$ | Fahrwerkshöhe an der Hinterachse |
| $h_{RA\_soll}$ | Soll-Fahrwerkshöhe für die Luftfedern der Hinterachse |
| $h_{RAL}$ | Fahrwerkshöhe an der Luftfeder der Hinterachse links |
| $h_{RAR}$ | Fahrwerkshöhe an der Luftfeder der Hinterachse rechts |
| $dh_{FA}$ | Fahrwerkshöhendifferenz an der Vorderachse |
| $dh_{RA}$ | Fahrwerkshöhendifferenz an der Hinterachse |
| $\Delta h_{Tol}$ | Höhentoleranz |
| IS-1 - IS-4 | Impulssequenzen |
| $p_{FAL}$ | Balgdruck an der Vorderachse links |
| $p_{FAL\_soll}$ | Ziel-Balgdruck an der Vorderachse links |
| $p_{FAR}$ | Balgdruck an der Vorderachse rechts |
| $p_{FAR\_soll}$ | Ziel-Balgdruck an der Vorderachse rechts |
| $p_{RAL}$ | Balgdruck an der Hinterachse links |
| $p_{RAL\_soll}$ | Ziel-Balgdruck an der Hinterachse links |
| $p_{RAR}$ | Balgdruck an der Hinterachse rechts |
| $p_{RAR\_soll}$ | Ziel-Balgdruck an Hinterachse rechts |
| $dp_{FA}$ | Balgdruckdifferenz an der Vorderachse |
| $dp_{FA\_Fil+}$ | Balgdruckdifferenz an der Vorderachse, stark tiefpassgefiltert |
| $dp_{FA\_Fil-}$ | Balgdruckdifferenz an der Vorderachse, schwach tiefpassgefiltert |
| $dp_{RA}$ | Balgdruckdifferenz an der Hinterachse |
| $\Delta p_{Tol}$ | Differenzdrucktoleranz |
| RA | Hinterachse |
| t | Zeit, Zeitpunkt |
| U | Spannung |

**Patentansprüche**

1. Verfahren zur Steuerung einer Luftfederungsanlage (2, 2') eines Fahrzeugs (1) mit den folgenden Verfahrensschritten:

- Bereitstellen des Fahrzeugs (1) umfassend die Luftfederungsanlage (2, 2'), wobei das Fahrzeug (1) Folgendes aufweist:

- eine luftgefederte Vorderachse (FA) und mindestens eine luftgefederte Hinterachse (RA),
- beidseitig an jeder der luftgefederten Fahrzeugachsen (FA, RA) jeweils zwischen einem Fahrwerksbauteil und einem Fahrzeugrahmen angeordnete Luftfedern (4, 6, 8, 10) mit jeweils einem druckluftgefüllten Federbalg (5, 7, 9, 11),
- eine Ventilanordnung mit

- zu jeder der Luftfedern (4, 6, 8, 10) jeweils einem zugeordneten Absperrventil (14, 20, 38, 44) und
- den Absperrventilen gruppenweise vorgeschalteten kombinierten Einlass-/Auslassventilen (24, 48; 24', 48'), und

- eine Sensoranordnung, wobei die Sensoranordnung

- jeweils einen nahe an jeder der Luftfedern (4, 6, 8, 10) angeordneten Wegsensor (66, 70, 74, 78) zur Messung der jeweiligen Fahrwerkshöhe ($h_{FAL}$, $h_{FAR}$, $h_{RAL}$, $h_{RAR}$), sowie
- jeweils einen an den Federbalg (5, 7, 9, 11) jeder der Luftfedern (4, 6, 8, 10) angeschlossenen Drucksensor (82, 86, 90, 94) zur Messung des jeweiligen Balgdrucks ($p_{FAL}$, $p_{FAR}$, $p_{RAL}$, $p_{RAR}$) aufweist,

**dadurch gekennzeichnet, dass**

- die Balgdrücke ($p_{FAL}$, $p_{FAR}$) der Luftfedern (4, 6) an der Vorderachse (FA) miteinander verglichen werden, wobei aus den Balgdrücken ($p_{FAL}$, $p_{FAR}$) ein höherer Balgdruck ($p_{FAR}$; $p_{FAL}$) und ein niedrigerer Balgdruck ($p_{FAR}$; $p_{FAL}$) ermittelt wird und
- wenn eine ermittelte Balgdruckdifferenz ($dp_{FA}$ = $p_{FAL}$ - $p_{FAR}$) der Balgdrücke ($p_{FAL}$, $p_{FAR}$) der Luftfedern (4, 6) der Vorderachse (FA) eine vorgegebene Differenzdrucktoleranz ($\Delta p_{Tol}$) überschritten hat ($| dp_{FA} | = | p_{FAL}$ - $p_{FAR} | > | \Delta p_{Tol} |$), ein Ausgleich der Balgdruckdifferenz ($dp_{FA}$) an der Vorderachse (FA) durchgeführt wird, indem

- die Luftfeder (4; 6) der Vorderachse (FA), die den höheren Balgdruck ($p_{FAL}$; $p_{FAR}$) aufweist, sowie die dazu diagonal gegenüber angeordnete Luftfeder (8) der Hinterachse (RA) entlüftet werden und
- die Luftfeder (6; 4) der Vorderachse (FA), die den niedrigeren Balgdruck ($p_{FAR}$; $p_{FAL}$) aufweist, sowie die dazu diagonal gegenüber angeordnete Luftfeder (10) der Hinterachse (RA) belüftet werden.

2. Verfahren nach Anspruch 1, **dadurch gekennzeichnet, dass** die Differenzdrucktoleranz ($\Delta p_{Tol}$) für die Balgdruckdifferenz ($dp_{FA}$) an der Vorderachse (FA) maximal $\pm$ 100 kPa einschließlich der Bereichsgrenze beträgt.

3. Verfahren nach Anspruch 1 oder 2, **dadurch gekennzeichnet, dass**

- der Ausgleich der Balgdruckdifferenz ($dp_{FA}$) an der Vorderachse (FA) schrittweise in mehreren zeitlich zueinander beabstandeten Impulssequenzen (IS-1, IS-2, IS-3, IS-4) durchgeführt wird,
- wobei in jeder Impulssequenz jeweils zuerst die Belüftung der betreffenden Luftfedern (4; 10) durch eine impulsartige Umschaltung der kombinierten Einlass-/ Auslassventile (24, 48; 24', 48') sowie eine gleichzeitige Öffnung der zugeordneten, ersten Absperrventile (14, 44) erfolgt und
- wobei unmittelbar danach die Entlüftung der betreffenden Luftfedern (6; 8) durch eine impulsartige Öffnung der zugeordneten, zweiten Absperrventile (20, 38) stattfindet.

4. Verfahren nach Anspruch 3, **dadurch gekennzeichnet, dass**

- die Dauer der impulsartigen Umschaltung der kombinierten Einlass-/Auslassventile (24, 48; 24', 48') und die Dauer der gleichzeitigen Öffnung der ersten Absperrventile (14; 44) sowie
- die Dauer der impulsartigen Öffnung der zweiten Absperrventile (14; 44) jeweils in Abhängigkeit von
- aktuell gemessenen Balgdrücken ($p_{FAL}$, $p_{FAR}$, $p_{RAL}$, $p_{RAR}$) sowie
- Ziel-Balgdrücken ($p_{FAL\_soll}$, $p_{FAR\_soll}$, $p_{RAL\_soll}$, $p_{RAR\_soll}$) der Luftfedern (4, 6; 8, 10) derart bestimmt werden, dass die Fahrwerkshöhen ($h_{FAL}$, $h_{FAR}$, $h_{RAL}$, $h_{RAR}$) während der Impulssequen zen (IS-1, IS-2, IS-3, IS-4) zugeordnete Soll-Fahrwerkshöhen ($h_{FA\_soll}$, $h_{RA\_soll}$) innerhalb einer vorgegebenen Höhentoleranz ($\Delta h_{Tol}$) einhalten.

5. Verfahren nach Anspruch 4, **dadurch gekennzeichnet, dass** die Höhentoleranz ($\Delta h_{Tol}$) für die Luftfedern (4, 6; 8, 10) der Fahrzeugachsen (FA, RA) einschließlich der Bereichsgrenzen maximal +/- 10 mm beträgt.

6. Verfahren nach einem der Ansprüche 4 und 5, **dadurch gekennzeichnet, dass**

- mindestens eine der Fahrwerkshöhen ($h_{FAL}$, $h_{FAR}$, $h_{RAL}$, $h_{RAR}$) jeweils nach einer Impulssequenz (IS-1, IS-2, IS-3, IS-4) während eines normalen Niveauregelungsvorgangs korrigiert wird,
- sofern die betreffende Fahrwerkshöhe ($h_{FAL}$,

$h_{FAR}$, $h_{RAL}$, $h_{RAR}$) die zugeordnete Soll-Fahrwerkshöhe ($h_{FA\_soll}$, $h_{RA\_soll}$) um mehr als die Höhentoleranz ($\Delta h_{Tol}$) überschritten oder unterschritten hat.

7. Verfahren nach einem der Ansprüche 1 bis 6, **dadurch gekennzeichnet, dass** die von den Drucksensoren (82, 86, 90, 94) gemessenen Balgdrücke ($p_{FAL}$, $p_{FAR}$, $p_{RAL}$, $p_{RAR}$) tiefpassgefiltert werden, um einen Einfluss dynamischer Radlaständerungen auf den Ausgleich der Balgdruckdifferenz ($dp_{FA}$) an der Vorderachse (FA) auszuschließen.

8. Verfahren nach einem der Ansprüche 1 bis 7, **dadurch gekennzeichnet, dass** der Ausgleich der Balgdruckdifferenz ($dp_{FA}$) an den Federbälgen (5, 7) der Vorderachse (FA) nur während einer Geradeausfahrt erfolgt und bei einer Kurvenfahrt unterbleibt.

9. Verfahren nach einem der Ansprüche 1 bis 8, **dadurch gekennzeichnet, dass** der Ausgleich der Balgdruckdifferenz ($dp_{FA}$) an den Federbälgen (5, 7) der Vorderachse (FA) unterbleibt, sofern

- eine Verwindung ($dh_{FA}$ - $dh_{RA}$) der Fahrzeugachsen (FA, RA) das Doppelte der Höhentoleranz ($\Delta h_{Tol}$) erreicht oder überschritten hat ($|\, dh_{FA}$ - $dh_{RA}\, | \geq |\, 2 \cdot \Delta h_{Tol}\, |$) und
- durch einen Ausgleich der Balgdruckdifferenz ($dp_{FA}$) die Verwindung ($dh_{FA}$ - $dh_{RA}$) der Fahrzeugachsen (FA, RA) weiter zunehmen würde.

10. Verfahren nach einem der Ansprüche 1 bis 9, **dadurch gekennzeichnet, dass** das Fahrzeug (1) in einer Parksituation durch eine Anpassung der Balgdrücke ($p_{FAL}$, $p_{FAR}$, $p_{RAL}$, $p_{RAR}$) der Federbälge (5, 7, 9, 11) der Luftfedern (4, 6; 8, 10) horizontal ausgerichtet wird, sofern mittels mindestens eines Neigungssensors (98) ein ebener Fahrweg als Standort des Fahrzeugs (1) festgestellt wird.

**Claims**

1. Method for controlling an air suspension system (2, 2') of a vehicle (1), comprising the following method steps:

- providing the vehicle (1) comprising the air suspension system (2, 2'), the vehicle (1) comprising the following:
- an air-suspended front axle (FA) and at least one air-suspended rear axle (RA),
- on both sides of each of the air-suspended vehicle axles (FA, RA), air springs (4, 6, 8, 10) arranged between a chassis component and a vehicle frame, each with compressed-air-filled bellows (5, 7, 9, 11),
- a valve arrangement having
- shut-off valves (14, 20, 38, 44) associated with each of the air springs (4, 6, 8, 10) and
- combined inlet/outlet valves (24, 48; 24', 48'), which are connected in groups upstream of the shut-off valves, and
- a sensor arrangement, the sensor arrangement having
- displacement sensors (66, 70, 74, 78) arranged close to each of the air springs (4, 6, 8, 10) for measuring the relevant chassis height ($h_{FAL}$, $h_{FAR}$, $h_{RAL}$, $h_{RAR}$), and
- pressure sensors (82, 86, 90, 94) connected to the bellows (5, 7, 9, 11) of each of the air springs (4, 6, 8, 10) for measuring the relevant bellows pressure ($p_{FAL}$, $p_{FAR}$, $p_{RAL}$, $p_{RAR}$),

**characterized in that**

- the bellows pressures ($p_{FAL}$, $p_{FAR}$) of the air springs (4, 6) on the front axle (FA) are compared with one another, a higher bellows pressure ($p_{FAR}$; $p_{FAL}$) and a lower bellows pressure ($p_{FAR}$; $p_{FAL}$) being determined from the bellows pressures ($p_{FAL}$, $p_{FAR}$) and
- if a determined bellows pressure difference ($dp_{FA} = P_{FAL} - P_{FAR}$) of the bellows pressures ($p_{FAL}$, $p_{FAR}$) of the air springs (4, 6) of the front axle (FA) has exceeded ($| dp_{FA} | = | p_{FAL} - p_{FAR} | > | \Delta p_{Tol} |$) a predetermined differential pressure tolerance ($\Delta p_{Tol}$), compensation of the bellows pressure difference ($dp_{FA}$) on the front axle (FA) is carried out by
- the air spring (4; 6) of the front axle (FA) having the higher bellows pressure ($p_{FAL}$; $p_{FAR}$) and the air spring (8) of the rear axle (RA) arranged diagonally opposite thereto being ventilated and
- the air spring (6; 4) of the front axle (FA) having the lower bellows pressure ($p_{FAR}$; $p_{FAL}$) and the air spring (10) of the rear axle (RA) arranged diagonally opposite thereto being ventilated.

2. Method according to claim 1, **characterized in that** the differential pressure tolerance ($\Delta p_{Tol}$) for the bellows pressure difference ($dp_{FA}$) on the front axle (FA) is at most $\pm 100$ kPa including the range limit.

3. Method according to either claim 1 or claim 2, **characterized in that**

- the compensation of the bellows pressure difference ($dp_{FA}$) on the front axle (FA) is carried out stepwise in a plurality of temporally spaced pulse sequences (IS-1, IS-2, IS-3, IS-4),
- in each pulse sequence, the relevant air springs (4; 10) first being ventilated by a pulse-like switching of the combined inlet/outlet valves (24, 48; 24', 48') and simultaneous opening of the associated first shut-off valves (14, 44), and
- the ventilation of the relevant air springs (6; 8) taking place immediately thereafter through a pulse-like opening of the associated second shut-off valves (20, 38).

4. Method according to claim 3, **characterized in that**

- the duration of the pulse-like switching of the combined inlet/outlet valves (24, 48; 24', 48') and the duration of the simultaneous opening of the first shut-off valves (14; 44), and
- the duration of the pulse-like opening of the second shut-off valves (14; 44) are determined in each case depending on
- currently measured bellows pressures ($p_{FAL}$, $p_{FAR}$, $p_{RAL}$, $p_{RAR}$) and
- target bellows pressures ($p_{FAL\_soll}$, $p_{FAR\_soll}$, $p_{RAL\_soll}$, $p_{RAR\_soll}$) of the air springs (4, 6; 8, 10) such that the chassis heights ($h_{FAL}$, $h_{FAR}$, $h_{RAL}$, $h_{RAR}$) adhere to target chassis heights ($h_{FA\_soll}$, $h_{RA\_soll}$) assigned during the pulse sequences (IS-1, IS-2, IS-3, IS-4) within a predetermined height tolerance ($\Delta p_{Tol}$).

5. Method according to claim 4, **characterized in that** the height tolerance ($\Delta p_{Tol}$) for the air springs (4, 6; 8, 10) of the vehicle axles (FA, RA), including the range limits, is at most +/-10 m.

6. Method according to either claim 4 or claim 5, **characterized in that**

- at least one of the chassis heights ($h_{FAL}$, $h_{FAR}$, $h_{RAL}$, $h_{RAR}$) is corrected in each case after a pulse sequence (IS-1, IS-2, IS-3, IS-4) during a normal level control operation,
- if the relevant chassis height ($h_{FAL}$, $h_{FAR}$, $h_{RAL}$, $h_{RAR}$) has exceeded or not met the associated target chassis height ($h_{FA\_soll}$, $h_{RA\_soll}$) by more than the height tolerance ($\Delta p_{Tol}$).

7. Method according to any of claims 1 to 6, **characterized in that** the bellows pressures ($p_{FAL}$, $p_{FAR}$, $p_{RAL}$, $p_{RAR}$) measured by the pressure sensors (82, 86, 90, 94) are low-pass filtered in order to infer the influence of dynamic wheel load changes on the compensation of the bellows pressure difference ($dp_{FA}$) on the front axle (FA).

8. Method according to any of claims 1 to 7, **characterized in that** the compensation of the bellows pressure difference ($dp_{FA}$) on the bellows (5, 7) of the front axle (FA) takes place only during straight-ahead travel and is omitted when cornering.

9. Method according to any of claims 1 to 8, **charac-**

**terized in that** the compensation of the bellows pressure difference ($dp_{FA}$) on the bellows (5, 7) of the front axle (FA) is omitted if

- a twisting ($dh_{FA} - dh_{RA}$) of the vehicle axles (FA, RA) has reached or exceeded ($| dh_{FA} - dh_{RA} | \geq | 2 \cdot \Delta h_{Tol} |$) double the height tolerance ($\Delta h_{Tol}$) and
- the twisting ($dh_{FA} - dh_{RA}$) of the vehicle axes (FA, RA) would continue to increase due to compensation of the bellows pressure difference ($dp_{FA}$).

10. Method according to any of claims 1 to 9, **characterized in that** the vehicle (1) is oriented horizontally in a parking situation by adapting the bellows pressures ($p_{FAL}$, $p_{FAR}$, $p_{RAL}$, $p_{RAR}$) of the bellows (5, 7, 9, 11) of the air springs (4, 6; 8, 10) if a flat travel path is determined as the location of the vehicle (1) by means of at least one inclination sensor (98).

## Revendications

1. Procédé de commande d'un système de suspension pneumatique (2, 2') d'un véhicule (1) comportant les étapes de procédé suivantes :

   - fourniture du véhicule (1) comprenant le système de suspension pneumatique (2, 2'), le véhicule (1) présentant :

      - un essieu avant (FA) à suspension pneumatique et au moins un essieu arrière (RA) à suspension pneumatique,
      - des ressorts pneumatiques (4, 6, 8, 10) comportant respectivement un soufflet (5, 7, 9, 11) rempli d'air comprimé, disposés des deux côtés sur chacun des essieux de véhicule (FA, RA) à suspension pneumatique, respectivement entre un composant de châssis et un châssis de véhicule,
      - un arrangement de vannes comportant

         - une vanne d'arrêt (14, 20, 38, 44) associée respectivement à chacun des ressorts pneumatiques (4, 6, 8, 10) et
         - des soupapes d'admission/d'échappement (24, 48 ; 24', 48') combinées connectées par groupe en amont des vannes d'arrêt, et

      - un arrangement de capteurs, l'arrangement de capteurs présentant

         - respectivement un capteur de course (66, 70, 74, 78) disposé près de chacun des ressorts pneumatiques (4, 6, 8, 10) pour la mesure de la hauteur de châssis ($h_{FAL}$, $h_{FAR}$, $h_{RAL}$, $h_{RAR}$), ainsi que
- respectivement un capteur de pression (82, 86, 90, 94) connecté au soufflet (5, 7, 9, 11) de chacun des ressorts pneumatiques (4, 6, 8, 10) pour la mesure de la pression de soufflet respective ($p_{FAL}$, $p_{FAR}$, $p_{RAL}$, $p_{RAR}$), **caractérisé en ce que**

- les pressions de soufflet ($p_{FAL}$, $p_{FAR}$) des ressorts pneumatiques (4, 6) sur l'essieu avant (FA) sont comparées les unes aux autres, une pression de soufflet supérieure ($p_{FAR}$ ; $p_{FAL}$) et une pression de soufflet inférieure ($p_{FAR}$ ; $p_{FAL}$) étant déterminées à partir des pressions de soufflet ($p_{FAL}$, $p_{FAR}$) et
- lorsqu'une différence de pression de soufflet ($dp_{FA} = P_{FAL} - p_{FAR}$) déterminée des soufflets ($p_{FAL}$, $p_{FAR}$) des ressorts pneumatiques (4, 6) de l'essieu avant (FA) a dépassé une tolérance de pression différentielle ($\Delta p_{Tol}$) prédéfinie ($| dp_{FA} | = | p_{FAL} - p_{FAR} | > | \Delta p_{Tol} |$), un équilibrage de la différence de pression de soufflet ($dp_{FA}$) est effectué sur l'essieu avant (FA), en

   - purgeant le ressort pneumatique (4, 6) de l'essieu avant (FA) qui présente la pression de soufflet ($p_{FAL}$ ; $p_{FAR}$) la plus élevée, ainsi que le ressort pneumatique (8) de l'essieu arrière (RA) disposé diagonalement par rapport à celui-ci et
   - alimentant en air le ressort pneumatique (6, 4) de l'essieu avant (FA) qui présente la pression de soufflet ($p_{FAR}$ ; $p_{FAL}$) la plus basse, ainsi que le ressort pneumatique (10) de l'essieu arrière (RA) disposé diagonalement par rapport à celui-ci.

2. Procédé selon la revendication 1, **caractérisé en ce que** la tolérance de pression différentielle ($\Delta p_{Tol}$) pour la différence de pression de soufflet ($dp_{FA}$) sur l'essieu avant (FA) est d'au maximum $\pm$ 100 kPa, la limite de plage incluse.

3. Procédé selon la revendication 1 ou 2, **caractérisé en ce que**

   - l'équilibrage de la différence de pression de soufflet ($dp_{FA}$) sur l'essieu avant (FA) est effectué progressivement en plusieurs séquences d'impulsions (IS-1, IS-2, IS-3, IS- 4) espacées temporellement les unes de autres,
   - dans chaque séquence d'impulsions l'alimentation des ressorts pneumatiques (4, 10) concernés étant effectuée respectivement en premier par une commutation de type impulsionnel des soupapes d'admission/d'échappement (24, 48 ; 24', 48') combinées, ainsi que l'ouverture simultanée des premières vannes d'arrêt (14, 44) associées et

- immédiatement après la purge des ressorts pneumatiques (6, 8) concernés ayant lieu par une ouverture de type impulsionnel des deuxièmes vannes d'arrêt (20, 38) associées.

4. Procédé selon la revendication 3, **caractérisé en ce que**

- la durée de la commutation de type impulsionnel des soupapes d'admission/d'échappement (24, 48 ; 24', 48') combinées et la durée de l'ouverture simultanée des premières vannes d'arrêt (14, 44), ainsi que
- la durée de l'ouverture de type impulsionnel des deuxièmes vannes d'arrêt (14, 44)

sont déterminées respectivement en fonction de

- pressions de soufflet mesurées actuelles ($p_{FAL}$, $p_{FAR}$, $p_{RAL}$, $p_{RAR}$), ainsi que de
- pressions de soufflet cibles ($p_{FAL\_soll}$, $p_{FAR\_soll}$, $p_{RAL\_soll}$, $p_{RAR\_soll}$) des ressorts pneumatiques (4, 6 ; 8, 10) de telle façon que les hauteurs de châssis ($h_{FAL}$, $h_{FAR}$, $h_{RAL}$, $h_{RAR}$) maintiennent pendant les séquences d'impulsions (IS-1, IS-2, IS-3, IS-4) des hauteurs de châssis de consigne ($h_{FA\_soll}$, $h_{RA\_soll}$) associées dans une plage de tolérance de hauteur ($\Delta p_{Tol}$) prédéfinie.

5. Procédé selon la revendication 4, **caractérisé en ce que** la tolérance de hauteur ($\Delta p_{Tol}$) pour les ressorts pneumatiques (4, 6, 8, 10) des essieux de véhicule (FA, RA) est de +/-10 mm, les limites de plage incluses.

6. Procédé selon l'une quelconque des revendications 4 et 5,
**caractérisé en ce que**

- au moins une des hauteurs de châssis ($h_{FAL}$, $h_{FAR}$, $h_{RAL}$, $h_{RAR}$) est corrigée respectivement après une séquence d'impulsion (IS-1, IS-2, IS-3, IS-4) pendant un processus de réglage de niveau normal,
- dans la mesure où la hauteur de châssis ($h_{FAL}$, $h_{FAR}$, $h_{RAL}$, $h_{RAR}$) dépasse la hauteur de châssis de consigne ($h_{FA\_soll}$, $h_{RA\_soll}$) associée vers le haut ou vers le bas de plus de la tolérance de hauteur ($\Delta p_{Tol}$).

7. Procédé selon l'une quelconque des revendications 1 à 6,
**caractérisé en ce que** les pressions de soufflet ($p_{FAL}$, $p_{FAR}$, $p_{RAL}$, $p_{RAR}$) mesurées par les capteurs de pression (82, 86, 90, 94) sont filtrée en passe-bas, pour exclure une influence de modifications dynamiques de charges de roues sur l'équilibrage de la différence de pression de soufflet ($dp_{FA}$) sur l'essieu avant (FA).

8. Procédé selon l'une quelconque des revendications 1 à 7,
**caractérisé en ce que** l'équilibrage de la différence de pression de soufflet ($dp_{FA}$) sur les soufflets (5, 7) de l'essieu avant (FA) n'est effectué que pendant la conduite en ligne droite et est omis durant une conduite en virage.

9. Procédé selon l'une quelconque des revendications 1 à 8,
**caractérisé en ce que** l'équilibrage de la différence de pression de soufflet ($dp_{FA}$) sur les soufflets (5, 7) de l'essieu avant (FA) est omis, dans la mesure où

- une torsion ($dh_{FA}$ - $dh_{RA}$) des essieux de véhicule (FA, RA) a atteint ou dépassé le double ($| dh_{FA} - dh_{RA} | \geq | 2 \cdot \Delta h_{Tol} |$) de la tolérance de hauteurs ($\Delta h_{Tol}$) et
- un équilibrage de la différence de pression de soufflet ($dp_{FA}$) augmenterait la torsion ($dh_{FA}$ - $dh_{RA}$) des essieux de véhicule (FA, RA).

10. Procédé selon l'une quelconque des revendications 1 à 9,
**caractérisé en ce que,** dans une situation de stationnement, le véhicule (1) est aligné horizontalement par un ajustement des pressions de soufflet ($p_{FAL}$, $p_{FAR}$, $p_{RAL}$, $p_{RAR}$) des soufflet (5, 7, 9, 11) des ressorts pneumatiques (4, 6, 8, 10), dans la mesure où, au moyen d'au moins un capteur d'inclinaison (98), une voie de circulation plane est constatée comme lie de stationnement du véhicule (1).

$\Delta h_{Tol} = +8$ mm

$h_{FAL}$ — +4 mm

$h_{FA\_soll}$

$h_{FAR}$ — -4 mm

$\Delta h_{Tol} = -8$ mm

$h_{FAL} - h_{FAR} = +8$ mm

FA

$p_{FAL}$

$p_{FAR}$

$\Delta h_{Tol} = +8$ mm

$h_{RAR}$ — +4 mm

$h_{RA\_soll}$

$h_{RAL}$ — -4 mm

$\Delta h_{Tol} = -8$ mm

$h_{RAL} - h_{RAR} = -8$ mm

RA

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19546730 A1
- DE 19515255 A1
- DE 102005032219 B4
- DE 102012006468 A1
- DE 102018118062 A1
- DE 3815612 A1
- DE 102006017899 A1
- EP 647425 A2
- DE 4003188 A1
- DE 10330895 A1
- DE 10243895 A1
- DE 10244363 A1